# EUROPEAN PATENT APPLICATION

(11) **EP 2 612 892 A1**
(43) Date of publication of application: **10.07.2013**
(21) Application number: 11821938.5
(22) Date of filing: 01.09.2011
(51) Int. Cl.: C09K 3/14

(54) **FRICTION MATERIAL**

(30) Priority: 03.09.2010 JP 2010197843
(71) Applicant: Nissan Motor Co., Ltd, Yokohama-shi, Kanagawa 221-0023 (JP); Akebono Brake Industry Co., Ltd., Tokyo 103-8534 (JP)
(72) Inventor: HATANO, Naoki, Yokohama-shi, Kanagawa (JP); OGATA, Yoshio, Yokohama-shi, Kanagawa (JP); FUKUI ,Takayuki, Yokohama-shi, Kanagawa (JP); MOCHIDA, Masahiro, Tokyo (JP); TAKAHASHI, Yasunori, Tokyo (JP)
(74) Representative: Grünecker, Kinkeldey, Stockmair & Schwanhäusser
(86) International application number: PCT/JP2011/069942
(87) International publication number: WO 2012/029923

(57) **Abstract**

Provided is a friction material having adequate fade resistance and high frictional strength even at very high temperatures in the region of 700 °C. The friction material of the present invention comprises a fiber base, a friction modifier, and a binder. The friction material contains potassium titanate powder, steel fiber, calcium pyrophosphate, and iron oxide.

## Description

### Technical Field

The invention relates to a friction material in which fade resistance at high temperatures is improved, and more particularly, to a friction material that is used for a brake pad, a brake lining, a clutch facing and the like of a vehicle, a railway vehicle, an industrial machine and the like.

### Background Art

A friction material that is used for a brake such as disc brake and drum brake, a clutch and the like includes a fibrous material for reinforcement, a friction modifier that provides a friction effect and modifies friction performance thereof and a binder that integrates the components. Among the friction materials that are currently used, a Non-Asbestos-Organic based friction material (hereinafter, referred to as "NAO material") that uses a fibrous material such as aramid and ceramics fibers and has a stable friction coefficient and adequate squeal and judder characteristics is mainly used.

In recent years, the needs for performance of the friction material are increased more and more, and a friction material having fade resistance at high temperatures is needed. PTL 1 discloses a friction material that is obtained by mixing a metal material having a melting point of 1,400 to 1,750 °C and has an adequate friction coefficient even at high temperatures higher than 300 °C. PTL 2 discloses a friction material that is formed by mixing α-alumina and γ-alumina in a part of an inorganic friction modifier and using a silicon-containing phenol resin in a part of a binder, exhibits less effect deterioration at high load, high speed and high temperatures and has excellent µ-stability, fade resistance and µ-buildup.

Also, PTL 3 discloses that sticking of a friction material to an opponent member, which is caused when a pressurization stop state is maintained after fade at high temperatures (which is problematic when cryolite that is used as a counter measure for friction coefficient lowering due to a fade phenomenon is added), is solved by adding calcium pyrophosphate.

### Citation List

### [Patent Literature]

[PTL 1] JP-A-2007-314598
[PTL 2] JP-A-2004-346179
[PTL 3] JP-A-2009-132816

### Summary of Invention

### Technical Problem

However, regarding a repetition braking test of high speed and high deceleration at high temperatures in a region of 700 °C (hereinafter, referred to as 'very high temperatures'), which test requires fade resistance more strict than the fade resistance at high temperatures conventionally required, there is no friction material exhibiting a sufficient result. The conventional friction material cannot endure the fade test at the very high temperatures and a braking distance is increased, so that the conventional friction material cannot achieve a target value.
Accordingly, the invention has been made to solve the above problem. An object of the invention is to provide a friction material having adequate fade resistance and high friction strength even at very high temperatures in a region of 700 °C.

### Solution to Problem

The inventors studied the friction material from all angles and found that the friction material containing following four components realizes the above object. That is, the invention is as follows.

(1) A friction material comprising: a fibrous material; a friction modifier; and a binder, wherein the friction material contains potassium titanate powders, steel fibers, calcium pyrophosphate and iron oxide.
(2) In the friction material described in the above (1), an amount of the potassium titanate powders is 10 to 30 mass%.
(3) In the friction material described in the above (1) or (2), an amount of the steel fibers is 1 to 7 mass%.
(4) In the friction material described in one of the above (1) to (3), an amount of the calcium pyrophosphate is 5 to 20 mass%.
(5) In the friction material described in one of the above (1) to (4), an amount of the iron oxide is 1 to 5 mass%.

### Advantageous Effects of Invention

The above four components are contained, so that the adequate fade resistance are secured and the strength of the friction material itself is improved even at very high temperatures of 700°C. As a result, the friction material having the improved wear characteristics is obtained.
According to the invention, it is possible to provide a friction material having adequate fade resistance and high friction strength even at very high temperatures in a region of 700 °C.

### Description of Embodiments

The friction material of the invention is a friction material including at least a fibrous material, a friction modifier and a binder. The friction material generally includes a fibrous material for reinforcing the friction material, a binder for integrating materials included in the friction material and a variety of solid powder materials for providing a friction effect to the friction material and modifying friction performance of the friction material, which are referred to as a friction modifier, a solid lubricant, a filler and the like in some cases. In the present invention, they are not particularly distinguished and the solid powder-like material for providing a friction effect to the friction material and modifying friction performance of the friction material, other than the fibrous material and the binder, is collectively referred to as 'friction modifier.'

Potassium titanate that is used in the invention is added in a form of powders, and a median diameter of the primary particle thereof is preferably 6 to 20 µm. The granular potassium titanate is contained, so that the friction material is filled more closely and a skeletal formation force is increased. Thereby, it is possible to improve the number of brakings at very high temperatures. A mixing amount of the potassium titanate in the whole friction material is preferably 10 to 30 mass%, more preferably 15 to 25 mass%. When the mixing amount is 10 mass% or more, the sufficient skeletal formation force is obtained and the adequate fade resistance are thus secured. Also, when the mixing amount is 30 mass% or less, the wear resistance becomes more favorable.

A steel fiber that is used in the invention is not particularly limited insomuch as it is generally used in the field of the invention. A mixing amount of the steel fibers in the whole friction material is preferably 1 to 7 mass%, more preferably 2 to 5 mass%. In the present invention, the steel fibers further improve the skeletal formation force that is provided by the potassium titanate powders and the like. When the mixing amount is 1 mass% or more, the effect of improving the skeletal formation force is sufficiently obtained, so that the adequate fade resistance are secured. When the mixing amount is 7 mass% or less, the same kind of friction effect as an opposite material is difficult to occur, the wear resistance is not deteriorated and the adequate effect is obtained. The more the mixing amount of the steel fibers, the µ maintaining force of the fade becomes higher. However, a wear amount of a rotor also tends to increase. An average fiber diameter and an average fiber length of the steel fibers are not particularly limited. However, the average fiber diameter is preferably 10 to 600 µm and the average fiber length is 0.5 to 20 mm.

Calcium pyrophosphate that is used in the invention is added in a form of powders and an average diameter thereof is preferably 6 to 25 µm. The calcium pyrophosphate is added, so that the fade resistance at very high temperatures is improved. This is because a skeletal formation force of a pad is improved. A mixing amount of the calcium pyrophosphate is preferably 5 to 20 mass%, more preferably 5 to 15 mass%. In this range, the wear resistance is not deteriorated and the skeletal formation force is effectively obtained, so that the adequate fade resistance is secured.

Iron oxide that is used in the invention may be Fe₂O₃ or Fe₃O₄. The iron oxide is contained, so that the friction material is densified and the wear amount of the pad at very high temperatures can be thus decreased. A particle diameter of the iron oxide is preferably 0.2 to 1.0 µm. In a case where the particle diameter of the iron oxide is too large, both the pad wear and the rotor wear tend to increase. Also, a mixing amount of the iron oxides in the whole friction material is preferably 1 to 5 mass%, more preferably 1 to 3 mass%. In a case where the mixing amount is 1 mass% or more, the effect of densifying the friction material is sufficiently demonstrated, so that the favorable wear resistance is secured. In a case where the mixing amount is 5 mass% or less, a abrasive effect of the iron oxides is favorably demonstrated and the wear resistance is not also adversely affected.

The fibrous material that is used in the invention is not particularly limited. That is, the fibrous material that is generally used in the field of the invention is used. For example, an aromatic polyamide fiber, an organic fiber such as flame-resistant acrylic fiber, a metal fiber such as copper fiber and brass fiber, a potassium titanate fiber, an Al₂O₃-SiO₂ based ceramic fiber, a bio-soluble ceramic fiber, a glass fiber and an inorganic fiber such as carbon fiber may be used. One of them or a combination of two or more may be used. A length of the fibrous material is preferably 100 to 2,500 µm and a diameter thereof is preferably 3 to 600 µm.
A mixing amount of the fibrous material (excluding the steel fibers) in the whole friction material is preferably 1 to 30 mass%, more preferably 5 to 15 mass%.

As the binder that is used in the invention, the well-known one that is typically used in the friction material may be used. For example, a phenol resin, a melamine resin, an epoxy resin, a polyimide resin, a variety of modified phenol resins such as epoxy-modified phenol resin, oil-modified phenol resin, alkyl benzene-modified phenol resin and cashew-modified phenol resin, a thermosetting resin such as NBR may be used. One of them or a combination of two or more may be used.
A mixing amount of the binder is not particularly limited. However, the mixing amount thereof in the whole friction material is preferably 5 to 20 mass%, more preferably 5 to 10 mass%.

In the present invention, as the friction modifier for providing a friction effect and modifying the friction performance thereof, a variety of friction modifiers can be used in the general friction material, depending on various purposes, in addition to the above mixing components. A variety of solid powder materials referred to as abrasive, filler, solid lubricant and the like can be used.

For example, inorganic fillers such as calcium carbonate, barium sulfate, calcium hydroxide, iron sulfate, copper sulfate, silicon oxide, metal powders (copper, aluminum, bronze, zinc and the like), vermiculite, mica and the like, abrasives such as alumina, magnesia, zirconia, chromium oxide, chromite and the like, a variety of rubber powders (rubber dust, tire powders and the like), organic fillers such as cashew dust, melamine dust and the like, solid lubricants such as graphite, molybdenum disulfide, and the like may be used. One of them or a combination of two or more may be mixed depending on friction characteristics that are required for a product, for example friction coefficient, wear resistance, vibration characteristics, squeal characteristics and the like.
A mixing amount of the friction modifiers in the whole friction material, including the above mixing components, is preferably 50 to 90 mass%, more preferably 70 to 90 mass%.

In order to fabricate the friction material of the invention, the fibrous material, the friction modifier and the binder are mixed in predetermined amounts, and the mixture thereof is pre-formed, thermally molded, cured and ground in accordance with a general manufacturing method.

A brake pad having the friction material can be manufactured by following processes. A pressure plate, is formed to have a predetermined shape by a plate press, is subject to degreasing and primer processing, and an adhesive is applied thereto. The pressure plate and a performer of the friction material are subject to a thermoforming process for 2 to 10 minutes at forming temperatures of 140 to 170 °C and forming pressures of 30 to 80 MPa, so as to be integrally fixed to each other. An after-curing for the obtained molded product is performed for 1 to 4 hours at temperatures of 150 to 300 °C, and a finish processing is finally performed.

### Embodiments

In the below, the embodiments and comparative examples are described to specifically explain the invention. However, it should be noted that the invention is not limited to the below embodiments. Also, the average particle diameters of the potassium titanate powders, the calcium pyrophosphates and the iron oxides were measured by a laser diffraction grain size distribution method and numerical values of 50% particle sizes of the cumulative distribution curve were used as the median diameters. Also, the average fiber diameter and average fiber length of the steel fibers were measured by an optical meter.

### Embodiments 1 to 23 and Comparative Examples 1 to 4

The friction materials were fabricated by mixing raw materials having the mixing ratios described in Tables 1 to 3 for five minutes by a high-speed mixer, forming the same at conditions of the forming pressure of 40 MPa and the forming time of 5 minutes and performing the after-curing for 2 hours at the temperature of 250 °C.

**[Table 1]**

| | | Emb. 1 | Emb. 2 | Emb. 3 | Emb. 4 | Emb. 5 | Emb. 6 | Emb. 7 | Emb. 8 | Emb. 9 | Emb. 10 | Emb. 11 | Emb. 12 | Emb. 13 |
|---|---|---|---|---|---|---|---|---|---|---|---|---|---|---|
| binder | phenol resin | 7.0 | 7.0 | 7.0 | 7.0 | 7.0 | 7.0 | 7.0 | 7.0 | 7.0 | 7.0 | 7.0 | 7.0 | 7.0 |
| fibrous material | steel fibier | 3.0 | 3.0 | 3.0 | 3.0 | 3.0 | 3.0 | 3.0 | 0.5 | 1.0 | 2.0 | 5.0 | 7.0 | 10.0 |
| | bio soluble ceramic fiber | 2.0 | 2.0 | 2.0 | 2.0 | 2.0 | 2.0 | 2.0 | 2.0 | 2.0 | 2.0 | 2.0 | 2.0 | 2.0 |
| | copper fiber | 6.0 | 6.0 | 6.0 | 6.0 | 6.0 | 6.0 | 6.0 | 6.0 | 6.0 | 6.0 | 6.0 | 6.0 | 6.0 |
| | aramid fiber | 3.0 | 3.0 | 3.0 | 3.0 | 3.0 | 3.0 | 3.0 | 3.0 | 3.0 | 3.0 | 3.0 | 3.0 | 3.0 |
| friction modifier | cashew dust | 5.0 | 5.0 | 5.0 | 5.0 | 5.0 | 5.0 | 5.0 | 5.0 | 5.0 | 5.0 | 5.0 | 5.0 | 5.0 |
| | barium sulfate | 24.5 | 39.5 | 34.5 | 29.5 | 19.5 | 14.5 | 4.5 | 27.0 | 26.5 | 25.5 | 22.5 | 20.5 | 30.0 |
| | calcium hydroxide | 2.5 | 2.5 | 2.5 | 2.5 | 2.5 | 2.5 | 2.5 | 2.5 | 2.5 | 2.5 | 2.5 | 2.5 | 2.5 |
| | mica | 2.0 | 2.0 | 2.0 | 2.0 | 2.0 | 2.0 | 2.0 | 2.0 | 2.0 | 2.0 | 2.0 | 2.0 | 2.0 |
| | graphite | 8.0 | 8.0 | 8.0 | 8.0 | 8.0 | 8.0 | 8.0 | 8.0 | 8.0 | 8.0 | 8.0 | 8.0 | 8.0 |
| | chromite | 5.0 | 5.0 | 5.0 | 5.0 | 5.0 | 5.0 | 5.0 | 5.0 | 5.0 | 5.0 | 5.0 | 5.0 | 5.0 |
| | iron oxide | 2.0 | 2.0 | 2.0 | 2.0 | 2.0 | 2.0 | 2.0 | 2.0 | 2.0 | 2.0 | 2.0 | 2.0 | 2.0 |
| | potassium titanate powders | 20.0 | 5.0 | 10.0 | 15.0 | 25.0 | 30.0 | 40.0 | 20.0 | 20.0 | 20.0 | 20.0 | 20.0 | 20.0 |
| | calcium pyrophosphate | 10.0 | 10.0 | 10.0 | 10.0 | 10.0 | 10.0 | 10.0 | 10.0 | 10.0 | 10.0 | 10.0 | 10.0 | 10.0 |
| total (mass%) | | 100.0 | 100.0 | 100.0 | 100.0 | 100.0 | 100.0 | 100.0 | 100.0 | 100.0 | 100.0 | 100.0 | 100.0 | 100.0 |

**[Table 2]**

| | | Emb. 14 | Emb. 15 | Emb. 16 | Emb. 17 | Emb. 18 | Emb. 19 | Emb. 20 | Emb. 21 | Emb. 22 | Emb. 23 |
|---|---|---|---|---|---|---|---|---|---|---|---|
| binder | phenol resin | 7.0 | 7.0 | 7.0 | 7.0 | 7.0 | 7.0 | 7.0 | 7.0 | 7.0 | 7.0 |
| fibrous material | steel fiber | 3.0 | 3.0 | 3.0 | 3.0 | 3.0 | 3.0 | 3.0 | 3.0 | 3.0 | 3.0 |
| | bio soluble ceramic fiber | 2.0 | 2.0 | 2.0 | 2.0 | 2.0 | 2.0 | 2.0 | 2.0 | 2.0 | 2.0 |
| | copper fiber | 6.0 | 6.0 | 6.0 | 6.0 | 6.0 | 6.0 | 6.0 | 6.0 | 6.0 | 6.0 |
| | aramid fiber | 3.0 | 3.0 | 3.0 | 3.0 | 3.0 | 3.0 | 3.0 | 3.0 | 3.0 | 3.0 |
| friction modifier | cashew dust | 5.0 | 5.0 | 5.0 | 5.0 | 5.0 | 5.0 | 5.0 | 5.0 | 5.0 | 5.0 |
| | barium sulfate | 32.5 | 29.5 | 19.5 | 14.5 | 9.5 | 26.0 | 25.5 | 23.5 | 21.5 | 18.5 |
| | calcium hydroxide | 2.5 | 2.5 | 2.5 | 2.5 | 2.5 | 2.5 | 2.5 | 2.5 | 2.5 | 2.5 |
| | mica | 2.0 | 2.0 | 2.0 | 2.0 | 2.0 | 2.0 | 2.0 | 2.0 | 2.0 | 2.0 |
| | graphite | 8.0 | 8.0 | 8.0 | 8.0 | 8.0 | 8.0 | 8.0 | 8.0 | 8.0 | 8.0 |
| | chromite | 5.0 | 5.0 | 5.0 | 5.0 | 5.0 | 5.0 | 5.0 | 5.0 | 5.0 | 5.0 |
| | iron oxide | 2.0 | 2.0 | 2.0 | 2.0 | 2.0 | 0.5 | 1.0 | 3.0 | 5.0 | 8.0 |
| | potassium titanate powder | 20.0 | 20.0 | 20.0 | 20.0 | 20.0 | 20.0 | 20.0 | 20.0 | 20.0 | 20.0 |
| | calcium pyrophosphate | 2.0 | 5.0 | 15.0 | 20.0 | 25.0 | 10.0 | 10.0 | 10.0 | 10.0 | 10.0 |
| total (mass%) | | 100.0 | 100.0 | 100.0 | 100.0 | 100.0 | 100.0 | 100.0 | 100.0 | 100.0 | 100.0 |

**[Table 3]**

| | | Comp. 1 | Comp. 2 | Comp. 3 | Comp. 4 |
|---|---|---|---|---|---|
| binder | phenol resin | 7.0 | 7.0 | 7.0 | 7.0 |
| fibrous material | steel fiber | 3.0 | - | 3.0 | 3.0 |
| | bio soluble ceramic fiber | 2.0 | 2.0 | 2.0 | 2.0 |
| | copper fiber | 6.0 | 6.0 | 6.0 | 6.0 |
| | aramid fiber | 3.0 | 3.0 | 3.0 | 3.0 |
| friction modifier | cashew dust | 5.0 | 5.0 | 5.0 | 5.0 |
| | barium sulfate | 44.5 | 27.5 | 34.5 | 26.5 |
| | calcium hydroxide | 2.5 | 2.5 | 2.5 | 2.5 |
| | mica | 2.0 | 2.0 | 2.0 | 2.0 |
| | graphite | 8.0 | 8.0 | 8.0 | 8.0 |
| | chromite | 5.0 | 5.0 | 5.0 | 5.0 |
| | iron oxide | 2.0 | 2.0 | 2.0 | - |
| | potassium titanate powder | - | 20.0 | 20.0 | 20.0 |
| | calcium pyrophosphate | 10.0 | 10.0 | - | 10.0 |
| total (mass%) | | 100.0 | 100.0 | 100.0 | 100.0 |

Also, the average particle diameters of the raw materials shown in Tables 1 to 3 are as follows.
· average particle diameter of potassium titanate powders: 13 µm
· average fiber diameter of steel fibers: 300 µm/average fiber length: 1 mm
· average particle diameter of calcium pyrophosphate: 15 µm
· average particle diameter of iron oxide: 0.5 µm

Results of fade tests of the respective friction materials obtained as the molded products in the embodiments 1 to 23 and comparative examples 1 to 4 are summarized in Tables 4 to 6.

Here, the fade resistance and the wear amounts of the pads were measured as follows.

### 1) Fade Resistance

The fade test was performed by a dynamometer on condition that the initial rate was 160 km/h, the deceleration was 10 m/s², the maximum temperature was 700 °C and the number of brakings was 40 times, the lowest friction coefficient to the overall number of brakings was determined by a vehicle weight system (for example, 0.25) and the number of times exceeding the corresponding value was determined.
A: the number of times is 14 times or more
B: the number of times is 10 times or more and less than 14 times
C: the number of times is less than 10 times

### 2) Measurement of Wear Amount of Pad

The wear amounts of the pads were measured upon completion of the fade test.
A: the wear amount is less than 3 mm
B: the wear amount is 3 mm or more and less than 5 mm
C: the wear amount is 5 mm or more

**[Table 4]**

| | Emb. 1 | Emb. 2 | Emb. 3 | Emb. 4 | Emb. 5 | Emb. 6 | Emb. 7 | Emb. 8 | Emb. 9 | Emb. 10 | Emb. 11 | Emb. 12 | Emb. 13 |
|---|---|---|---|---|---|---|---|---|---|---|---|---|---|
| the number of times | A | B | A | A | A | A | B | B | A | A | A | A | B |
| wear amount | A | B | B | A | A | B | B | B | B | A | A | B | B |

**[Table 5]**

| | Emb. 14 | Emb. 15 | Emb. 16 | Emb. 17 | Emb. 18 | Emb. 19 | Emb. 20 | Emb. 21 | Emb. 22 | Emb. 23 |
|---|---|---|---|---|---|---|---|---|---|---|
| the number of times | B | A | A | A | B | B | A | A | B | B |
| wear amount | B | A | A | B | B | B | A | A | A | B |

**[Table 6]**

| | Comp. 1 | Comp. 2 | Comp. 3 | Comp. 4 |
|---|---|---|---|---|
| the number of times | C | C | C | B |
| wear amount | C | C | C | C |

From the results of the embodiments and comparative examples, it can be seen that the friction materials of the invention have adequate fade resistance and high wear strength even at very high temperatures in the region of 700 °C and the remarkably excellent effects are obtained, compared to the friction materials of the comparative examples.

This application is based on Japanese Patent Application No. 2010-197843 filed on September 3, 2010, the disclosures of which are incorporated herein by way of reference.

### Industrial Applicability

The friction material of the invention has the adequate fade resistance and high friction strength even at very high temperatures in the region of 700 °C and can be appropriately used for a disc pad, a brake lining, a clutch facing and the like of a vehicle, a large-sized truck, a railway vehicle, a variety of industrial machines and the like.

## Claims

1. A friction material comprising:
a fibrous material;
a friction modifier; and
a binder,
wherein the friction material contains potassium titanate powders, steel fibers, calcium pyrophosphate and iron oxide.

2. The friction material according to claim 1, wherein
an amount of the potassium titanate powders is 10 to 30 mass%.

3. The friction material according to claim 1 or 2, wherein
an amount of the steel fibers is 1 to 7 mass%.

4. The friction material according to one of claims 1 to 3, wherein
an amount of the calcium pyrophosphate is 5 to 20 mass%.

5. The friction material according to one of claims 1 to 4, wherein
an amount of the iron oxide is 1 to 5 mass%.
